# EUROPÄISCHE PATENTSCHRIFT

(11) **EP 3 636 565 B1**
(45) Veröffentlichungstag und Bekanntmachung des Hinweises auf die Patenterteilung: **21.02.2024**
(21) Anmeldenummer: 18199138.1
(22) Anmeldetag: 08.10.2018
(51) Int. Cl.: B65G 47/90, A61J 7/00, B65G 1/04, G07F 11/16

(54) **BEDIENGERÄT ZUM EIN- UND AUSLAGERN VON FLASCHENARTIGEN STÜCKGÜTERN**
OPERATOR'S DEVICE FOR THE STORING AND RETRIEVING OF BOTTLE-LIKE PIECE GOODS
APPAREIL DE COMMANDE DESTINÉ AU CHARGEMENT ET DÉCHARGEMENT DES MARCHANDISES DE DÉTAIL DE TYPE BOUTEILLE

(43) Veröffentlichungstag der Anmeldung: 15.04.2020
(73) Patentinhaber: Becton Dickinson Rowa Germany GmbH, 53539 Kelberg (DE)
(72) Erfinder: HELLENBRAND, Christoph, 56761 Kaifenheim (DE)
(74) Vertreter: Zenz Patentanwälte Partnerschaft mbB

(56) Entgegenhaltungen:
- EP-A1- 2 163 507
- EP-A1- 2 256 703
- EP-A1- 3 170 771
- WO-A1-2015/069105
- WO-A2-2015/038999
- DE-A1-102011 084 634
- JP-A- H0 748 004
- JP-A- 2006 137 577
- US-A1- 2008 152 466
- US-A1- 2016 200 513

## Beschreibung

Die vorliegende Erfindung betrifft ein Bediengerät zum Ein- und Auslagern von flaschenartigen Stückgütern auf bzw. von Lagerplätzen einer Kommissioniervorrichtung. Bei den flaschenartigen Stückgütern handelt es sich insbesondere um Arzneimittelflaschen und ähnlich geformte Arzneimittelverpackungen.

Bei aus dem Stand der Technik bekannten Kommissioniervorrichtungen wird eine große Anzahl verschiedener und unterschiedlich dimensionierter Arzneimittelpackungen chaotisch und platzoptimiert auf langgestreckten ebenen Regalböden oder schräg angeordneten Lagerschächten gelagert. Die gelagerten Arzneimittelpackungen werden mit Hilfe eines Bediengerätes ausgelagert, wozu die auf einem Regalboden angeordneten Arzneimittelpackungen mit Klemmbacken eines Bediengeräts auf einen Ablagetisch des Bediengeräts bewegt werden. Die Klemmbacken des Bediengeräts sind insbesondere dazu ausgelegt, Arzneimittelpackungen mit einer quadratischen Grundfläche aus- und einzulagern.

Die "üblichen" in einer Kommissioniervorrichtung zu lagernden Arzneimittelpackungen unterscheiden sich zwar hinsichtlich ihrer Dimensionen, haben aber üblicherweise eine ebene Grundfläche und orthogonal zu der Grundfläche ausgerichtete, parallele Seitenflächen und wiederum orthogonal zu diesen ausgerichtete Stirnflächen, so dass die Arzneimittelpackungen mit üblicherweise schwenkbaren Klemmbecken klemmgegriffen und von einem Lagerplatz auf den Ablagetisch des Bediengerätes gezogen werden können.

Flaschenartig geformte Stückgüter bzw. Arzneimittelpackungen können mit den bekannten Bediengeräten in bekannten Kommissioniervorrichtungen nur stehend auf ihrer üblicherweise kreisrunden Bodenfläche gelagert werden. Eine solche Lagerung ist jedoch nicht platzoptimiert, da sich die Höhen der flaschenartigen Arzneimittelpackungen stark unterscheiden. Auch ist es ab einem gewissen Gewicht schwierig die Arzneimittelpackungen mit den üblicherweise verwendeten Klemmbacken von einem Lagerplatz auf den Ablagetisch zu ziehen, ohne dass die Gefahr besteht, dass die flaschenartige Arzneimittelpackung bei dieser Bewegung umfällt (und eine weitere Auslagerung unmöglich macht) oder sich die Klemmbacken bei der Ziehbewegung aufbiegen und damit das Ziehen von dem Lagerplatz unmöglich gemacht wird. Alternativ ist es möglich, flaschenartige Arzneimittelpackungen in Trägern zu lagern, wobei diese Träger wie übliche Arzneimittelpackungen ausgebildet sind und dementsprechend mit bekannten Bediengeräten ein- und ausgelagert werden können. Dies bedingt jedoch, dass die Arzneimittelflaschen vor Lagerung in entsprechende Träger verbracht werden und nach Auslagerung aus diesen entfernt werden, was das Gesamt-Handling zeitaufwendig macht. Darüber hinaus müssen für die unterschiedlich dimensionierten flaschenartigen Arzneimittelpackungen unterschiedliche Träger bereitgehalten werden, was die Lagerung von flaschenartigen Arzneimittelpackungen mit den bekannten Bediengeräten weiter verkompliziert. Zum Beispiel offenbaren EP 2 256 703 A1, JP 2006 137577 A, US 2008/152 466 A1 und DE 10 2011 084 634 A1 Bediengeräte, die zum Ein- und Auslagern von quaderförmigen Stückgütern geeignet sind. Die in den vorgenannten Druckschriften offenbarten Bediengeräte sind aber für flaschenartige Stückgüter ungeeignet. Das Dokument JP H07 48004 A offenbart ein Bediengerät mit den Merkmalen des Oberbegriffs des Anspruchs 1.

Es ist Aufgabe der vorliegenden Erfindung ein Bediengerät bereitzustellen, mit welchem flaschenartige Stückgüter, insbesondere Arzneimittelpackungen, liegend, ohne Zuhilfenahme eines speziell angepassten Trägers, ein- und ausgelagert werden können.

Die Aufgabe wird erfindungsgemäß gelöst durch ein Bediengerät zum Ein- und Auslagern von flaschenartigen Stückgütern auf bzw. von Lagerplätzen einer Kommissioniervorrichtung nach Anspruch 1.

Das erfindungsgemäße Bediengerät umfasst eine Greifbackenanordnung mit zwei sich in einer ersten horizontalen Richtung erstreckenden profilstabförmigen Greifbacken mit gegenüberliegenden Innenflächen, wobei die erste horizontale Richtung der Richtung zum Ein- und Auslagern von Stückgütern entspricht. Erfindungsgemäß sind die Greifbacken derart ausgebildet, dass sich der Abstand der Innenflächen voneinander zumindest abschnittsweise nach unten verjüngt, so dass die Innenflächen derart ausgebildet sind, dass die flaschenartigen Stückgüter von unten angehoben werden können. Darüber hinaus umfasst das Bediengerät eine mit der Greifbackenanordnung gekoppelte erste Antriebseinheit zum Bewegen der Greifbackenanordnung in der ersten horizontalen Richtung, so dass angehobene Stückgüter von einem Lagerplatz entfernt bzw. hin zu diesem geführt werden können.

Erfindungsgemäß sind die Greifbacken als Flachprofile mit ebenen Innenflächen ausgebildet. Da es erfindungsgemäß notwendig ist, dass sich der Abstand der Innenflächen voneinander zumindest abschnittsweise nach unten verjüngt, sind die Flachprofile V-förmig zueinander angestellt.

Mit permanent V-förmig zueinander angestellten, als Flachprofile mit ebenen Innenflächen ausgebildeten Greifbacken können zwar flaschenartige Stückgüter gut ein- und ausgelagert werden, jedoch ist es mit einem Bediengerät mit entsprechenden Greifbacken nicht oder nur sehr schwer möglich, "normale" Arzneimittelpackungen, also solche mit rechteckiger Grundfläche, ein- und auszulagern. Daher ist es erfindungsgemäß vorgesehen, dass die Greifbacken drehbar gelagert sind, so dass die Greifbacken mittels einer zweiten Antriebseinheit aus einer Untergreifstellung, in welcher sich der Abstand der Innenflächen zumindest abschnittsweise nach unten verjüngt, in eine Klemmstellung drehbar sind, in welcher die Innenflächen der Greifbacken beispielsweise parallel zueinander ausgerichtet sind. Mit einem entsprechend ausgebildeten Bediengerät ist es möglich, sowohl flaschenartige Arzneimittelpackungen als auch solche mit rechteckiger Grundfläche ein- und auszulagern.

Aufgrund der erfindungsgemäßen Ausgestaltung der Greifbacken, also aufgrund dessen, dass sich der Abstand der Innenflächen voneinander zumindest abschnittsweise nach unten verjüngt, ist es möglich, flaschenartige Arzneimittelpackungen mit ganz unterschiedlichem Durchmesser ein- und auszulagern. Jedoch ist es mit Greifbacken, die einen feststehenden Abstand zueinander haben, auch bei der erfindungsgemäßen Ausrichtung der Innenflächen nur möglich, flaschenartige Arzneimittelpackungen mit einem gewissen Durchmesser- bzw. Radiusfenster ein- und auszulagern. Wird der Durchmesser der flaschenartigen Arzneimittelpackungen zu groß, können diese nicht mehr sicher in der durch die Innenflächen mit dem sich nach unten verjüngenden Abstand gebildeten Mulde gelagert werden. Ist der Durchmesser zu gering, ist ein Untergreifen schlichtweg nicht mehr möglich, da die Greifbacken an der flaschenartigen Arzneimittelpackung vorbeigeführt würden.

Erfindungsgemäß ist es daher vorgesehen, dass das Bediengerät eine dritte, mit den Greifbacken gekoppelte Antriebseinheit aufweist, mit welcher die Greifbacken entlang einer zweiten horizontalen Richtung quer zur ersten horizontalen Richtung aufeinander zu und voneinander weg bewegbar sind. Bei einem entsprechend ausgebildeten Bediengerät können die Greifbacken an den Durchmesser von flaschenartig ausgebildeten Arzneimittelpackungen bzw. Stückgütern angepasst werden. Auch in dem Fall, in dem die Greifbacken drehbar gelagert sind, das Bediengerät also zum Ein- und Auslagern von flaschenartigen Arzneimittelpackungen und "normalen" Arzneimittelpackungen geeignet ist, ist eine entsprechende Ausbildung vorteilhaft, da so das Klemmgreifen von "normalen" Arzneimittelpackungen mit sehr unterschiedlichen Dimensionen ermöglicht wird.

Das erfindungsgemäße Bediengerät arbeitet also nach einem anderen Greifprinzip als dies die bekannten Bediengeräte für quaderförmige Arzneimittelpackungen tun. Das flaschenartige Stückgut, beispielsweise eine flaschenartige Arzneimittelpackung, wird nicht geklemmt und gezogen, sondern mit den Greifbacken untergriffen und angehoben. Dazu ist die erfindungsgemäße Ausrichtung der Klemmbacken erforderlich, um eine stabile Lage der flaschenartigen Stückgüter auf den Greifbacken zu ermöglichen. Die Innenflächen der profilstabförmigen Greifbacken sind dazu zumindest abschnittsweise so ausgebildet, dass ein sicherer Transport der flaschenartigen Stückgüter in der "Mulde", die durch die Innenflächen der stabförmigen Greifbacken definiert wird, gewährleistet ist.

Im Nachfolgenden werden bevorzugte Ausführungsformen des erfindungsgemäßen Bediengerätes unter Bezugnahme auf die Zeichnung beschrieben, in welcher
Figuren 1A und 1B Schrägansichten des erfindungsgemäßen Bediengerätes zeigen;
Figuren 2A und 2B Detailansichten zeigen;
Figur 3 eine weitere Detailansicht der gedrehten Greifbacken zeigt;
Figur 4 eine Vorderansicht der Greifbacken mit Bewegungsmechanismus zeigt;
Figur 5 eine Schrägansicht eines beispielhaften nicht beanspruchten Bediengeräts zeigt;
Figur 6 eine Detailansicht des Bediengeräts nach Figur 5 zeigt;
Figuren 7A und 7B Detailansichten eines beispielhaften nicht beanspruchten Bediengeräts zeigen;
Figur 8 eine Teildraufsicht des beispielhaften nicht beanspruchten Bediengeräts zeigt;
Figuren 9A und 9B Detailansichten des beispielhaften nicht beanspruchten Bediengeräts zeigen; und
Figuren 10A - 10D weitere Detailansichten des beispielhaften nicht beanspruchten Bediengeräts zeigen.

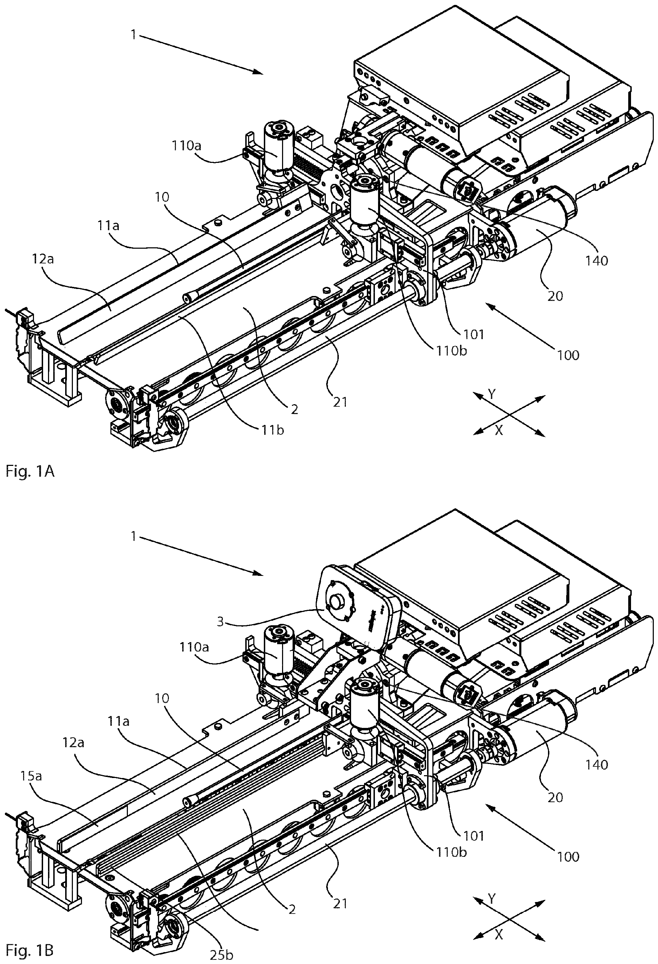

Figuren 1A und 1B zeigen zwei Schrägansichten des erfindungsgemäßen Bediengerätes, wobei die Greifbacken drehbar gelagert sind, so dass die Greifbacken mittels einer zweiten Antriebseinheit, gebildet aus Antrieben 110a, 110b, aus einer in Figur 1A gezeigten Untergreifstellung, in welcher sich der Abstand von Innenflächen 12a und (nicht dargestellt) 12b von gegenüberliegenden Greifbacken 11a, 11b nach unten verjüngt, in eine in Figur 1B gezeigte Klemmstellung drehbar sind, in welcher die Innenflächen 12a, 12b der Greifbacken 11a, 11b parallel zueinander ausgerichtet sind. Die Greifbacken 11a, 11b sind Teil einer Greifbackenanordnung 100 mit einer zentralen Rahmenstruktur 101, an welcher die beiden Anriebe 110a, 110b der zweiten Antriebseinheit befestigt sind. Die Greifbackenanordnung 100 sowie die Anordnung der Antriebe 110a, 110b an dieser wird unter Bezugnahme auf nachfolgende Figuren genauer beschrieben.

Das in den Figuren 1A und 1B gezeigte Bediengerät umfasst ferner eine erste Antriebseinheit 20, die Teil eines Linear-Antriebssystems ist, mit welcher die Greifbackenanordnung 100 entlang einer ersten horizontalen Richtung X bewegbar ist, wobei das Linear-Antriebssystem dazu eine Gewindespindel 21 umfasst, durch deren Drehbewegung die Greifbackenanordnung entlang der ersten horizontalen Richtung bewegt werden kann. Zwischen den beiden parallelen Greifbacken 11a, 11b ist ein Schieber 10 dargestellt, der über einen (nicht dargestellten) Antriebsmechanismus entlang der ersten horizontalen Richtung bewegt werden kann. Der Schieber kann insbesondere dazu verwendet werden "normale" Arzneimittelpackungen mit einer regelmäßig rechteckigen Grundfläche von einem Ablagetisch 2 des Bediengerätes auf beispielsweise einen Lagerplatz zu schieben.

Das in den Figuren 1A und 1B gezeigte Bediengerät ist aufgrund der speziellen Gestaltung geeignet, sowohl flaschenartige Arzneimittelpackungen als auch "normale" Arzneimittelpackungen ein- und auszulagern. Wie oben bereits angedeutet, sind die Greifbacken drehbar gelagert, d. h. sie können aus der in Figur 1A gezeigten Untergreifstellung für flaschenartige Arzneimittelpackungen, in die in Figur 1B gezeigte Stellung gedreht werden, in welcher die Innenflächen 12a, 12b der Greifbacken 11a, 11b parallel zueinander ausgebildet sind. Um die Klemmwirkung der Greifbacken zum Ein- und Auslagern von Arzneimittelpackungen zu unterstützen, können die Greifbacken bei ihren von der Greifbackanordnung abgewandten Enden Abschnitte 15a und (nicht dargestellt) 15b mit erhöhter Reibung aufweisen. Bei der gezeigten Ausführungsform umfasst die Greifbackenanordnung ferner ein Sensormittel 3, mit welchem beispielsweise die Ausrichtung des Ablagetisches 2 an einer Lagerfläche ermittelt werden kann. Das Bediengerät gemäß der ersten Ausführungsform umfasst ferner eine dritte Antriebseinheit 140, auf deren Funktion in nachfolgenden Figuren genauer eingegangen wird.

Bei Figur 1B kann man bei der Greifbacke 11b einen Steg 25b erkennen, der sich an der Außenseite der Greifbacke in X-Richtung erstreckt und für eine Verbesserung der Steifigkeit der Greifbacke sorgt, so dass sich die Greifbacke beispielsweise beim Anheben einer Arzneimittelpackung nicht nach Außen hin verbiegt. Ein entsprechender (aber nicht sichtbarer) Steg 25a ist an der Außenfläche der Greifbacke 11a ausgebildet.

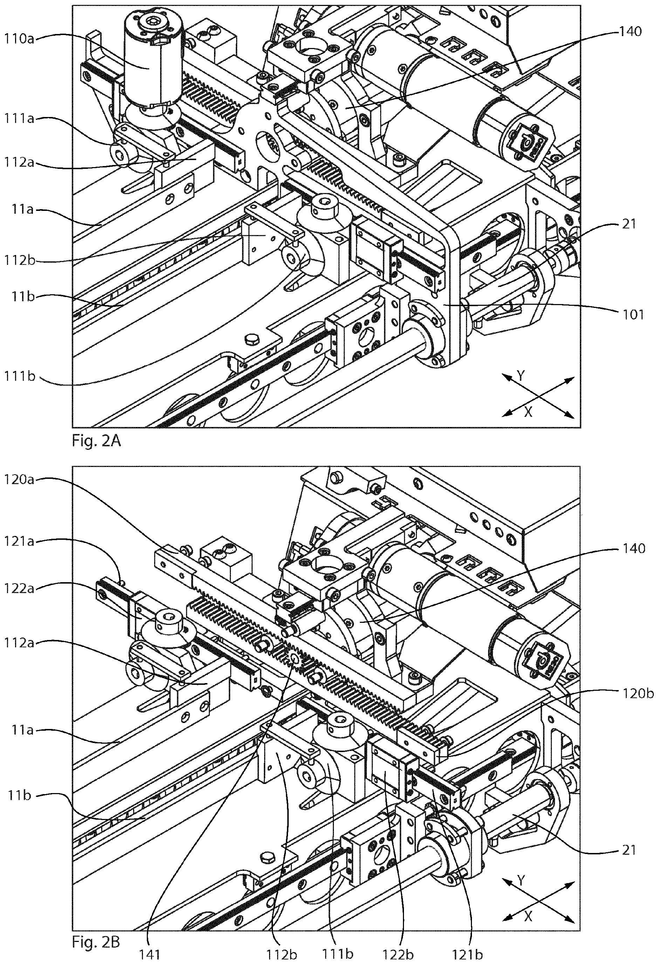

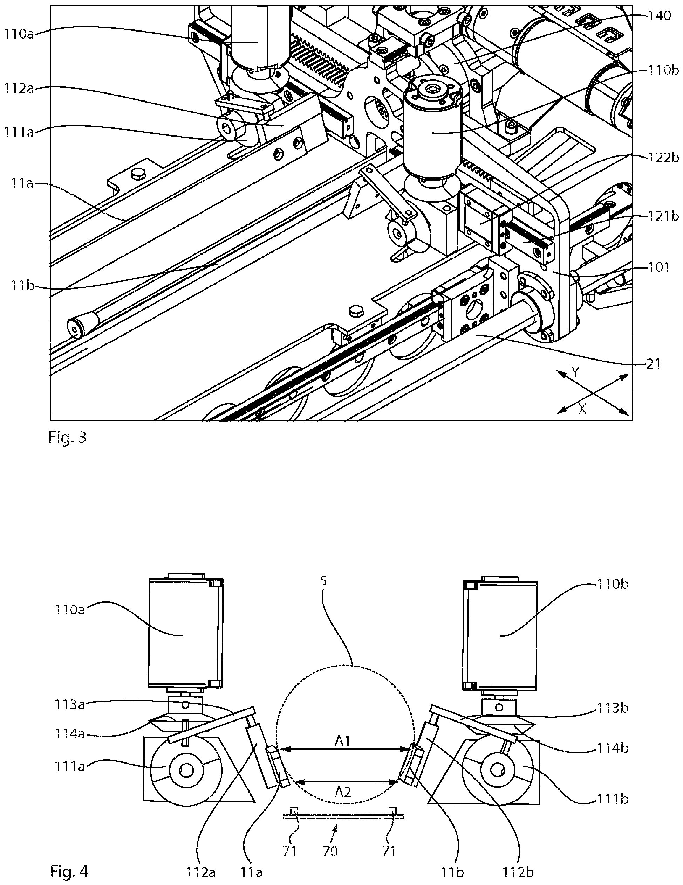

Figuren 2A und 2B zeigen Detailansichten des Bediengerätes im Bereich der Greifbackenanordnung 100, wobei bei den Figuren 2A und 2B verschiedene Bauteile zur Veranschaulichung ansonsten verdeckter Bauteile fortgelassen sind (bei Figur 2A der Antrieb 110b und bei Figur 2B die Antriebe 110a, 110b sowie die zentrale Rahmenstruktur 101). Wie es bei den Figuren 2A und 2B zu erkennen ist, sind die Antriebe 110a, 110b der zweiten Antriebseinheit über ein (insbesondere in Figur 4 detaillierter dargestelltes) Getriebe mit einem Drehmittel 111a, 111b, deren Drehachse sich in der ersten horizontalen Richtung X erstreckt, gekoppelt. Die Drehmittel wiederum sind über einen Steg mit Greifbackenhalterungen 112a, 112b gekoppelt, an denen die Greifbacken 11a, 11b befestigt sind. Mittels der Antriebe 110a, 110b können die Drehmittel derart bewegt werden, dass die Greifbacken aus der in den Figuren 2A und 2B gezeigten Stellung in die in Figur 3 gezeigte Untergreifstellung bewegt werden können.

Bei dem Bediengerät sind die Greifbacken darüber hinaus entlang einer zweiten horizontalen Richtung Y quer zur ersten horizontalen Richtung X aufeinander zu und voneinander weg bewegbar. Dazu sind die Greifbacken sowie die ihnen zugeordneten Antriebe, die Drehmittel sowie die Greifbackenhalterungen (110a - 112a, 110b - 112b) jeweils an einem Greifbacken-Schlitten 122a, 122b (siehe Figur 2B) befestigt. Dieser Greifbacken-Schlitten kann entlang einer Greifbackenführung 121a, 121b in der zweiten horizontalen Richtung Y bewegt werden. Dazu sind die Greifbacken (samt den ihnen zugeordneten Bauteilen) bei der gezeigten Ausführungsform über die Antriebe an Greifbacken-Antriebsstangen 120a, 120b befestigt, die als zwei parallel geführte Zahnstangen mit gegenüberliegendem Profil ausgebildet sind. Vertikal gesehen zwischen den Greifbacken-Antriebsstangen 120a, 120b ist ein mit der dritten Antriebseinheit gekoppeltes Zahnrad 141 angeordnet. Wird dieses mittels der dritten Antriebseinheit gedreht, wird die Drehbewegung des Zahnrades 141 auf die mit den Antrieben gekoppelten Greifbacken-Antriebsstangen 120a, 120b übertragen, wodurch die Greifbacken entlang der zweiten horizontalen Richtung Y quer zur ersten horizontalen Richtung X aufeinander zu und voneinander weg bewegt werden können.

Figur 3 zeigt noch einmal eine Detailansicht der Untergreifstellung, d. h. der Stellung, in welcher die Greifbacken des Bediengerätes derart bewegt sind, dass sich der Abstand der Innenflächen voneinander zumindest abschnittsweise nach unten verjüngt, so dass die Innenflächen derart ausgebildet sind, dass die flaschenartigen Stückgüter von unten angehoben werden können.

Figur 4 veranschaulicht mittels einer Vorderansicht der Greifbacken mit den dazugehörigen Antriebsanordnungen, wie mit den erfindungsgemäßen Greifbacken flaschenartige Stückgüter bzw. Arzneimittelpackungen ergriffen werden. In Abhängigkeit von der genauen Ausführungsform des Bediengerätes, nämlich ob die Greifbacken in der zweiten horizontalen Richtung Y quer zur ersten horizontalen Richtung X bewegt werden können, kann das flaschenartige Stückgut 5 von unten oder von der Seite mittels der Greifbacken angefahren werden und durch eine Vertikalbewegung des Bediengerätes von einem Lagerplatz entnommen werden. Figur 4 ist zu entnehmen, dass die Greifbacken 11a, 11b an den Greifbackenhalterungen 112a, 112b befestigt sind, die wiederum über Stege 113a, 113b an den Drehmitteln 111a, 111b befestigt sind, die über ein Getriebe 114a, 114b mit den Antrieben 110a, 110b gekoppelt sind. Mit dem erfindungsgemäßen Bediengerät ist es möglich, flaschenartige Stückgüter entlang ihrer Längsrichtung ein- und auszulagern. Dazu ist es erforderlich, dass die Kommissioniervorrichtung entsprechend angepasst ist, so dass die flaschenartigen Stückgüter bei ihren Lagerplätzen sicher gelagert sind. Dazu ist es beispielsweise denkbar, dass die Lagerplätze speziell an die flaschenartigen Stückgüter angepasste Halterungen aufweisen. Im einfachsten Fall kann es beispielsweise vorgesehen sein, dass ein Lagerplatz 70 zwei parallele Auflagemittel 71, 72 aufweist, die eine Lagerung der flaschenartigen Stückgüter in Längsrichtung ermöglichen. Die genaue Art der Lagerung der flaschenartigen Stückgüter in Längsrichtung in der Kommissioniervorrichtung ist jedoch nicht Teil dieser Erfindung und sei hier deshalb nur rudimentär kurz angedeutet.

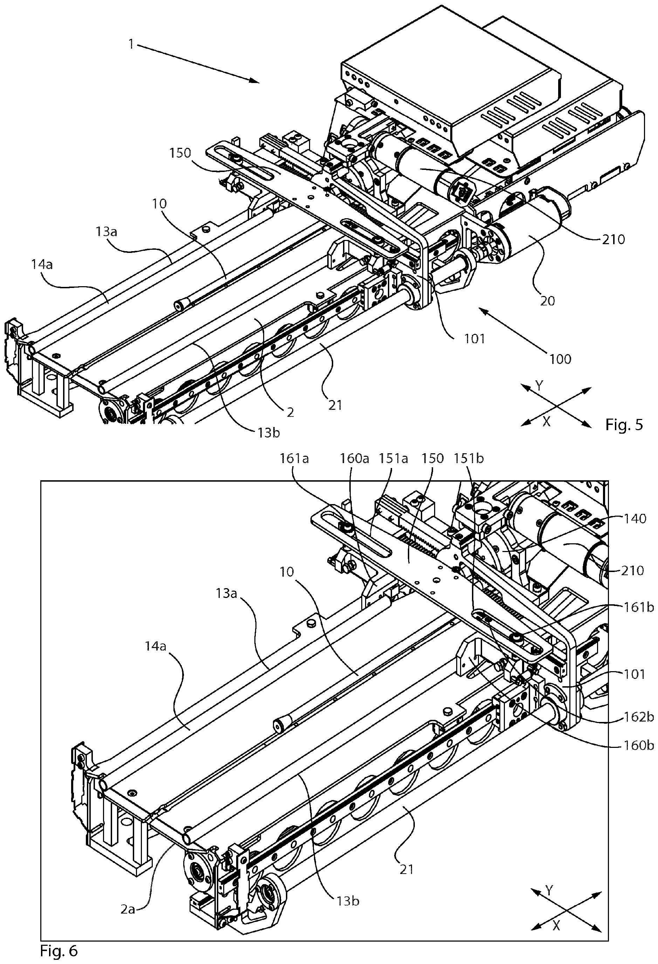

Figur 5 zeigt ein beispielhaftes nicht beanspruchtes Bediengerät. Bei diesem sind die Greifbacken 13a, 13b als Rundprofile ausgebildet, was bedingt, dass die Innenflächen 14a und (nicht gezeigt) 14b der Klemmbacken konvex zueinander ausgebildet sind. Durch diese Art der Ausbildung ist ebenfalls die Anforderung, dass sich der Abstand der Innenflächen voneinander zumindest abschnittsweise nach unten verjüngt, so dass die Innenflächen derart ausgebildet sind, dass die flaschenartigen Stückgüter von unten angehoben werden können, erfüllt. Auch dieses Beispiel umfasst eine Greifbackenanordnung 100 mit einer zentralen Rahmenstruktur 101. Bei diesem Beispiel umfasst die Greifbackenanordnung ferner eine obere Greifbackenführung 150, die nachfolgend mit Bezugnahme auf Figur 6 detaillierter beschrieben wird.

Die obere Greifbackenführung 150 umfasst zwei in der zweiten horizontalen Richtung Y ausgebildete Langlöcher 151a, 151b, in welche jeweils eine Nase 161a, 161b einer Greifbackenhalterung 160a, 160b eingreift. An den L-förmig ausgebildeten Greifbackenhalterungen 160a, 160b sind die als Rundprofil ausgebildeten Greifbacken 13a, 13b befestigt. Wie es bei Figur 6 angedeutet ist, sind die L-förmigen Greifbackenhalterungen 160a, 160b über vertikal verlaufende Schwenkachsen, von welchen bei Figur 6 lediglich die Schwenkachse 162b zu erkennen ist, an Greifbacken-Schlitten befestigt. Durch eine Bewegung der oberen Greifbacken-Führung 150 in der ersten horizontalen Richtung X kann aufgrund der schwenkbaren Lagerung der Greifbackenhalterungen 160a, 160b an den (in Figur 6 nicht genau zu erkennenden) Greifbacken-Schlitten ein Verschwenken der Greifbacken 13a, 13b erreicht werden. Durch Anordnung der Nasen 161a, 161b in den Langlöchern 151a, 151b der oberen Greifbacken-Führung 150 und Halterung der Greifbacken-Führungen an den vertikalen Schwenkachsen werden diese bei Bewegung der oberen Greifbacken-Führung hin zu der Ladekante 2a des Ablagetisches 2 bei den terminalen Enden nach innen geschwenkt. Die Bewegung der oberen Greifbacken-Führung 150 in der ersten horizontalen Richtung X wird durch die vierte Antriebseinheit 210 bewirkt, wie dies unter Bezugnahme auf nachfolgende Figuren detaillierter beschrieben wird.

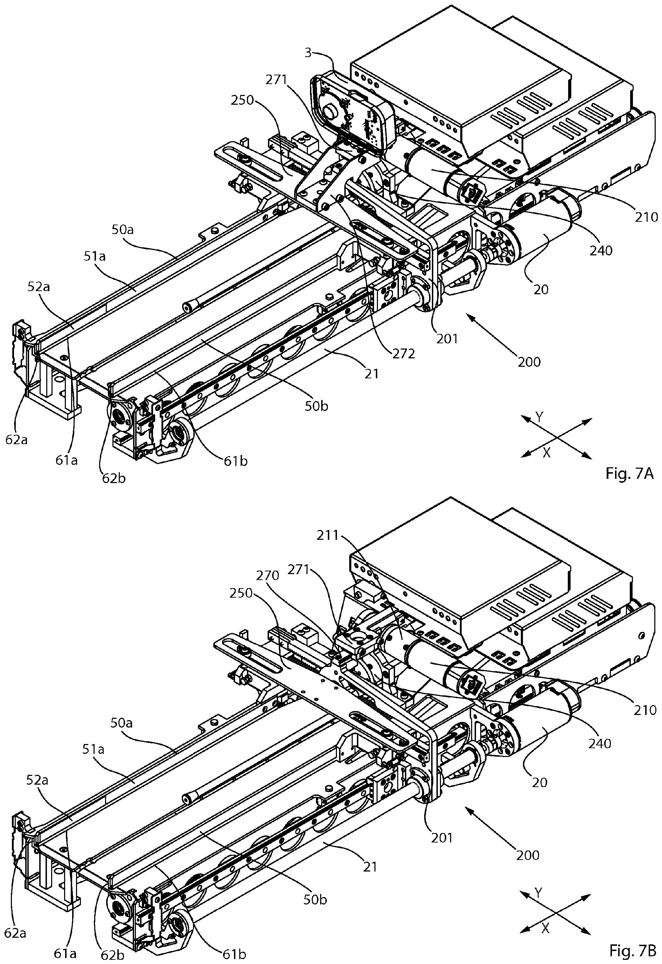

Figuren 7A und 7B zeigen Schrägansichten eines beispielhaften nicht beanspruchten Bediengerätes. Mit Bezugnahme auf das beispielhafte Bediengerät wird zunächst die Verschwenkbarkeit der Greifbacken beschrieben. Die zuvor beschriebene Verschwenkbarkeit der Greifbacken bei der zweiten Ausführungsform funktioniert entsprechend.

Wie dies Figur 7A zu entnehmen ist, ist hinter bzw. unter dem Sensor 3 eine vierte Antriebseinheit 210 vorgesehen. Wie dies Figur 7B zu entnehmen ist, ist die vierte Antriebseinheit 210 über ein Kopplungsstück 211 mit einem Schlitten 271 gekoppelt, der mittels der Antriebseinheit in der ersten horizontalen Richtung X auf einer Führung 270 bewegt werden kann. Der Schlitten 271, der, wie es Figur 7A zu entnehmen ist, den Sensor 3 trägt, ist über Kopplungselemente 272 mit einer oberen Greifbacken-Führung 250 verbunden. Über die Kopplungselemente 272 wird die Bewegung des Schlittens 271 in der ersten horizontalen Richtung auf die obere Greifbacken-Führung 250 übertragen, die sich dementsprechend bewegt.

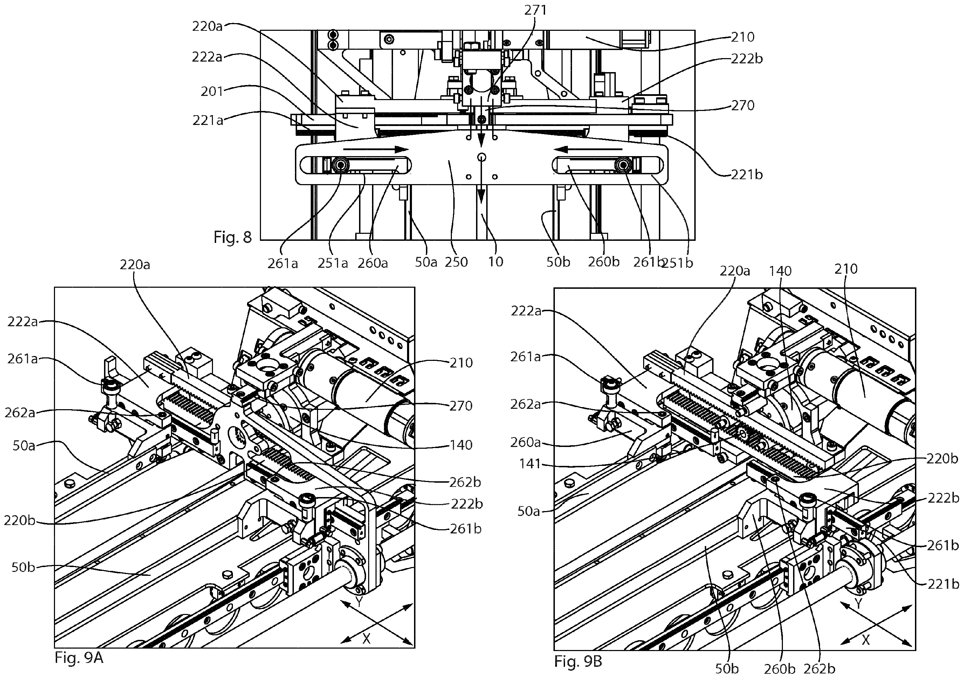

Figur 8 zeigt eine Draufsicht auf die Greifbackenanordnung 200 sowie deren Kopplung mit der vierten Antriebseinheit 210. Wie es Figur 8 zu entnehmen ist, erstrecken sich Nasen 261a, 261b von L-förmigen Greifbacken-Halterungen 260a, 260b in Langlöchern 251a, 251b, die in der oberen Greifbacken-Führung 250 ausgebildet sind. Wird nun die obere Greifbacken-Führung durch die vierte Antriebseinheit 210 nach vorne (in Figur 8 nach unten) bewegt, werden die L-förmigen Greifbacken-Halterungen, die über (in Figur 8 nicht erkennbare) vertikale Schwenkachsen 262a, 262b (siehe Figuren 9A und 9B) an Greifbacken-Schlitten 222a, 222b fixiert sind, über eine Mitnahme durch die Nasen der Greifbacken-Halterungen verschwenkt, so dass die von der Greifbackenanordnung entfernten Enden der Greifbacken (also die terminalen Enden) zusammengeschwenkt werden.

Die Figuren 9A und 9B zeigen Detailansichten der Greifbackenanordnung sowie deren Kopplung mit der vierten Antriebseinheit 210. Die vierte Antriebseinheit 210 ist über eine Kopplung 211 mit dem in der ersten horizontalen Richtung X bewegbaren Schlitten 271 gekoppelt, der auf der Führung 270 bewegbar ist. Über die lediglich in Figur 8 angedeuteten Kopplungselemente 272 wird die Bewegung in der ersten horizontalen Richtung X auf die obere Greifbacken-Halterung übertragen. Wie es den Figuren 9A und 9B zu entnehmen ist, sind die Greifbacken aber nicht nur verschwenkbar, sie können auch entlang der zweiten horizontalen Richtung Y bewegt werden. Dazu sind die Greifbacken-Schlitten 222a, 222b an Greifbacken-Antriebsstangen 220a, 220b befestigt, die über ein Zahnrad 141 der dritten Antriebseinheit 140 entlang der zweiten horizontalen Richtung Y bewegt werden können. Die Bewegung der Greifbacken-Schlitten 222a, 222b wird auf die L-förmigen Greifbacken-Halterungen 260a, 260b übertragen. Diese sind, wie es in den Figuren 9A und 9B zu entnehmen ist, über vertikale Achsen 262a, 262b mit den Greifbacken-Schlitten gekoppelt. An den Greifbacken-Halterungen wiederum sind die Greifbacken 50a, 50b befestigt. Durch die spezielle Art der Kopplung der Greifbacken innerhalb der Greifbackenanordnung sind diese also sowohl entlang der zweiten horizontalen Richtung Y verfahrbar als auch verschwenkbar.

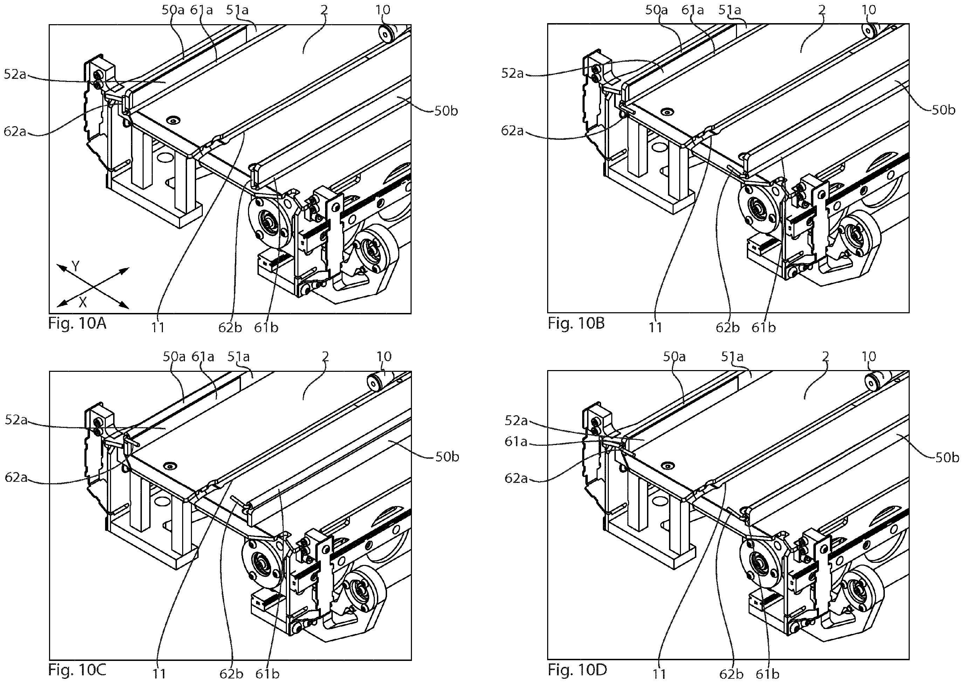

Unter Bezugnahme auf die Figuren 10A - 10D, die Detailansichten der der Greifbackenanordnung abgewandten Enden der Greifbacken zeigen, werden den Greifbacken zugeordnete Schwenkeinrichtung beschrieben, wobei diese Schwenkeinrichtungen bereits in den Figuren 7A und 7B gezeigt ist, aber nicht im Zusammenhang mit diesen Figuren diskutiert wurde. Wie es Figur 10A zu entnehmen ist, ist den als Flachprofil ausgebildeten Schwenkbacken 50a, 50b jeweils eine Schwenkeinrichtung zugeordnet, die ein sich in der ersten horizontalen Richtung X erstreckendes Führungsmittel 61a, 61b umfasst. Durch dieses Führungsmittel ist ein Schwenkelement 62a, 62b geführt, wobei jedes Schwenkelement bei seinem terminalen Ende einen um etwa 90° im Hinblick auf die Längsrichtung abgewinkelten Mitnehmerabschnitt aufweist, der bei Figur 10A vertikal an den Enden der Greifbacken ausgerichtet ist. Die Schwenkelemente sind über (nicht dargestellte) Antriebe drehbar, wobei über diese Drehbewegung der Mitnehmerabschnitt, wie dies in Figur 10B gezeigt ist, in den Bereich zwischen den Innenflächen 51a, 51b der Klemmbacken gedreht werden kann. Um eine auf einem Ablageort aufliegende flaschenartige Arzneimittelpackung mit den Greifbacken von diesem Ablageort zu ziehen, werden die Mitnehmerabschnitte, sobald die Greifbacken an die richtige Position in Bezug auf die erste horizontale Richtung verfahren wurden, in den Bereich zwischen den Greifbacken geschwenkt und hintergreifen somit bei entsprechender Ausrichtung der Greifbacken die üblicherweise rund ausgebildete Standfläche der Arzneimittelpackungen. Sobald eine entsprechende Hintergreifung ausgebildet ist, kann die flaschenförmige Arzneimittelpackung von dem Lagerort gezogen werden, wobei die parallelen Greifbacken als Führung dienen.

Bei der in Figur 10A gezeigten Variante sind die Führungsmittel 61a, 61b, durch welche sich die Schwenkelemente 62a, 62b erstrecken, unterhalb der eigentlichen Greifbacken angeordnet. Bei alternativen Varianten ist es selbstverständlich möglich, dass die Führungen 61a, 61b oberhalb der eigentlichen Greifbacken 50a, 50b angeordnet sind, wie dies in Figur 10C angedeutet ist. Alternativ können die Schwenkmittel 62a, 62b auch durch die Greifbacken geführt sein, wobei dann die Ausnehmungen in den Greifbacken die Führungsmittel bilden.

## Patentansprüche

1. Bediengerät (1) zum Ein- und Auslagern von flaschenartigen Stückgütern auf bzw. von Lagerplätzen einer Kommissioniervorrichtung, aufweisend:
eine Greifbackenanordnung (100; 200) mit
zwei sich in einer ersten horizontalen Richtung erstreckenden profilstabförmigen Greifbacken (11a, 11b; 13a, 13b; 50a, 50b) mit gegenüberliegenden Innenflächen (12a, 12b; 14a, 14b; 51a, 51b), wobei die erste horizontale Richtung (X) der Richtung zum Ein- und Auslagern von Stückgütern entspricht,
wobei die Greifbacken (11a, 11b; 13a, 13b; 50a, 50b) derart ausgebildet sind, dass sich der Abstand der Innenflächen (12a, 12b; 14a, 14b; 51a, 51b) voneinander zumindest abschnittsweise nach unten verjüngt, so dass die Innenflächen (12a, 12b; 14a, 14b; 51a, 51b) derart ausgebildet sind, dass die flaschenartigen Stückgüter von unten angehoben werden können, und
eine mit der Greifbackenanordnung (100; 200) gekoppelte erste Antriebseinheit (20, 21) zum Bewegen der Greifbackenanordnung (100; 200) in der ersten horizontalen Richtung (X),
wobei die Greifbacken (11a, 11b) drehbar gelagert sind, so dass die Greifbacken (11a, 11b) mittels einer zweiten Antriebseinheit (110a, 110b) aus einer Untergreifstellung, in welcher sich der Abstand der Innenflächen (12a, 12b) zumindest abschnittsweise nach unten verjüngt, in eine Klemmstellung drehbar sind, in welcher die Innenflächen (12a, 12b) der Greifbacken (11a, 11b) parallel zueinander ausgerichtet sind,
**dadurch gekennzeichnet, dass**
die Greifbacken (11a, 11b; 50a, 50b) als Flachprofile mit ebenen Innenflächen (12a, 12b; 51a, 51b) ausgebildet sind,
und dass das Bediengerät eine dritte, mit den Greifbacken (11a, 11b; 13a, 13b; 50a, 50b) gekoppelte Antriebseinheit (140) aufweist, mit welcher die Greifbacken (11a, 11b; 13a, 13b; 50a, 50b) entlang einer zweiten horizontalen Richtung (Y) quer zur ersten horizontalen Richtung (X) aufeinander zu und voneinander weg bewegbar sind.

## Claims

1. An operating device (1) for placing or retrieving bottle-like piece goods onto or from storage places of a picking device, comprising:
a gripping jaw assembly (100; 200) having
two profile-rod shaped gripping jaws (11a, 11b; 13a, 13b; 50a, 50b), having opposite lying inner surfaces (12a, 12b; 14a, 14b; 51a, 51b), extending in a first horizontal direction, wherein the first horizontal direction (X) corresponds to the direction for placing and retrieving piece goods,
wherein the gripping jaws (11a, 11b; 13a, 13b; 50a, 50b) are configured in such a manner that the distance of the inner surfaces (12a, 12b; 14a, 14b; 51a, 51b) at least in sections tapers in the downward direction, so that the inner surfaces (12a, 12b; 14a, 14b; 51a, 51b) are configured in such a manner that the bottle-like piece goods can be lifted from below, and
a first actuation unit (20, 21) coupled to the gripping jaw assembly (100; 200) for moving the gripping jaw assembly (100; 200) in the first horizontal direction (X),
wherein the gripping jaws (11a, 11b) are rotatably mounted so that the gripping jaws (11a, 11b) with the aid of a second actuation unit (110a, 110b) are rotatable from a position gripping from below, in which the distance of the inner surfaces (12a, 12b) at least in sections tapers in the downward direction, into a clamping position, in which the inner surfaces (12a, 12b) of the gripping jaws (11a, 11b) are aligned parallel to each another, **characterized in**
**that** the gripping jaws (11a, 11b; 50a, 50b) are configured as flat profiles having plane inner surfaces (12a, 12b; 51a, 51b), and
**that** the operating device has a third actuation unit (140) coupled to the gripping jaws (11a, 11b; 13a, 13b; 50a, 50b), by which the gripping jaws (11a, 11b; 13a, 13b; 50a, 50b) are movable toward and away from each other along a second horizontal direction (Y) transverse to the first horizontal direction (X).

## Revendications

1. Appareil de commande (1) pour le stockage et le déstockage d'articles en forme de bouteilles sur ou depuis des emplacements de stockage d'un dispositif de préparation de commandes, présentant :
un agencement de mâchoires de préhension (100 ; 200) avec
deux mâchoires de préhension (11a, 11b ; 13a, 13b ; 50a, 50b) en forme de barre profilée s'étendant dans une première direction horizontale avec des surfaces intérieures (12a, 12b ; 14a, 14b ; 51a, 51b) opposées, la première direction horizontale (X) correspondant à la direction pour le stockage et le déstockage de marchandises de détail,
les mâchoires de préhension (11a, 11b ; 13a, 13b ; 50a, 50b) étant réalisées de telle sorte que la distance entre les surfaces intérieures (12a, 12b ; 14a, 14b ; 51a, 51b) se rétrécit vers le bas au moins par sections, de sorte que les surfaces intérieures (12a, 12b ; 14a, 14b ; 51a, 51b) sont réalisées de telle sorte que les marchandises de détail de type bouteille peuvent être soulevées par le bas, et
une première unité d'entraînement (20, 21) couplée à l'ensemble de mâchoires de préhension (100 ; 200) pour déplacer l'ensemble de mâchoires de préhension (100 ; 200) dans la première direction horizontale (X),
les mâchoires de préhension (11a, 11b) étant logées de manière rotative, de sorte que les mâchoires de préhension (11a, 11b) peuvent être tournées au moyen d'une deuxième unité d'entraînement (110a, 110b) d'une position de préhension inférieure, dans laquelle la distance des surfaces intérieures (12a, 12b) se rétrécit au moins par sections vers le bas, dans une position de serrage, dans laquelle les surfaces intérieures (12a, 12b) des mâchoires de préhension (11a, 11b) sont orientées parallèlement les unes aux autres,
**caractérisé en ce que** les mâchoires de préhension (11a, 11b ; 50a, 50b) sont réalisées sous forme de profilés plats avec des surfaces intérieures (12a, 12b ; 51a, 51b) planes, et **en ce que** l'appareil de commande présente une troisième unité d'entraînement (140) couplée aux mâchoires de préhension (11a, 11b; 13a, 13b ; 50a, 50b), avec laquelle les mâchoires de préhension (11a, 11b ; 13a, 13b ; 50a, 50b) peuvent être rapprochées et éloignées les unes des autres le long d'une deuxième direction horizontale (Y) transversale à la première direction horizontale (X).
